# EUROPÄISCHE PATENTSCHRIFT

(11) **EP 0 387 318 B1**
(45) Veröffentlichungstag und Bekanntmachung des Hinweises auf die Patenterteilung: **23.06.1993**
(21) Anmeldenummer: 89908958.5
(22) Anmeldetag: 18.08.1989
(51) Int. Cl.: F16C 29/04

(54) **LÄNGSFÜHRUNGSSYSTEM**
LINEAR BEARING ARRANGEMENT
SYSTEME DE PALIER LINEAIRE

(30) Priorität: 31.08.1988 CH 3245/88; 20.07.1989 CH 2707/89
(43) Veröffentlichungstag der Anmeldung: 19.09.1990
(73) Patentinhaber: SFT AG Spontanfördertechnik, CH-8570 Weinfelden (CH)
(72) Erfinder: EBERLE, Jürg, CH-8340 Hinwil (CH)
(74) Vertreter: Frei, Alexandra Sarah
(86) Internationale Anmeldenummer: CH8900149
(87) Internationale Veröffentlichungsnummer: WO9002269

(56) Entgegenhaltungen:
- DE-A- 2 843 935
- NO-C- 56 419
- US-A- 2 830 824
- US-A- 2 952 145

## Beschreibung

Die Erfindung liegt auf dem Gebiet der Linearführungen und bezieht sich auf ein Längsführungssystem mit Rollkörpern und einer darauf abgestimmten Rollkörperführung gemäss Oberbegriff des Patentanspruchs 1, sowie auf einen zugehörigen Rollkörper und eine zugehörige Rollkörperführung gemäss Oberbegriff des Patentanspruchs 3 bzw. 9.

Rollkörper (bspw. Rolltische) und ihre entsprechenden Führungen, auf denen sie laufen, dienen zur reibungsarmen Ausführung von Bewegungsabläufen, insbesondere von linearen Bewegungsabläufen, für welche eine ganze Gattung von sogenannten Linear- bzw. Längsführungssystemen entstanden ist. Vielerlei Längsführungssysteme mit Rollen, Kugeln und anderen Wälzkörpern sind bekannt. Angestrebt wird stets eine möglichst reibungsarme Relativbewegung zwischen zwei Körpern, bspw. einer Führung oder Bahn und einem darauf bewegbaren Element, dem Rollkörper. Solche Längsführungen richten sich heute noch nach den Bauteilen der klassischen Kugellager aus, die es in mannigfachen Ausführungsformen gibt. Allen gemeinsam ist nämlich das Merkmal der in einer Reihe angeordneten Kugeln, die in einer Kugellaufbahn oder in einem Käfig gefangen aufgereiht in einer Linie bzw. Reihe plaziert sind. Ein Beispiel zeigt die US-2'952'145, bei welcher Längsführung zwei Reihen von Kugeln so zueinander angeordnet sind, dass die aufeinander abrollen. Das Ziel ist, die Gleitreibung zu minimieren, was bei dieser Konstruktion jedoch nur dann eintritt, wenn der Kraftverlauf durch die Belastung genau durch zwei Kugelpaare hindurch verläuft. Dieser Belastungsfall ist jedoch kritisch und kann im Betrieb nicht aufrecht erhalten werden, da sich die beiden auf Kugeln gelagerten relativ zueinander verschiebbaren Teile gegeneinander verdrehen werden und schon die geringste Verdrehung aus dem optimalen Betrieb der Vorrichtung hinausführt. Damit gibt es gar keinen realen Betriebsfall, der zum Ziel der Erfindung dieser genannten Druckschrift führt, da wie gesagt, diese Konstruktion keinen "schrägen" Kraftangriff ohne starkes Ansteigen der Gleitreibung aufnehmen kann. Somit ist trotz der Symmetrie der Lösung der optimale Kraftangriff auf eine einzige Stelle pro Kugelpaar begrenzt.

Diese Rollkörper mit der stets zugehörigen Laufbahn.sind wegen der geforderten Präzision in der Herstellung in der Regel teuer und für die meisten Applikationen sind auf diese stets angepasste, spezielle Typen oder Ausführungen zu verwenden. Das heisst jedoch, dass sie meist nur in ihrem Gebiet und nicht sehr vielseitig einsetzbar sind.

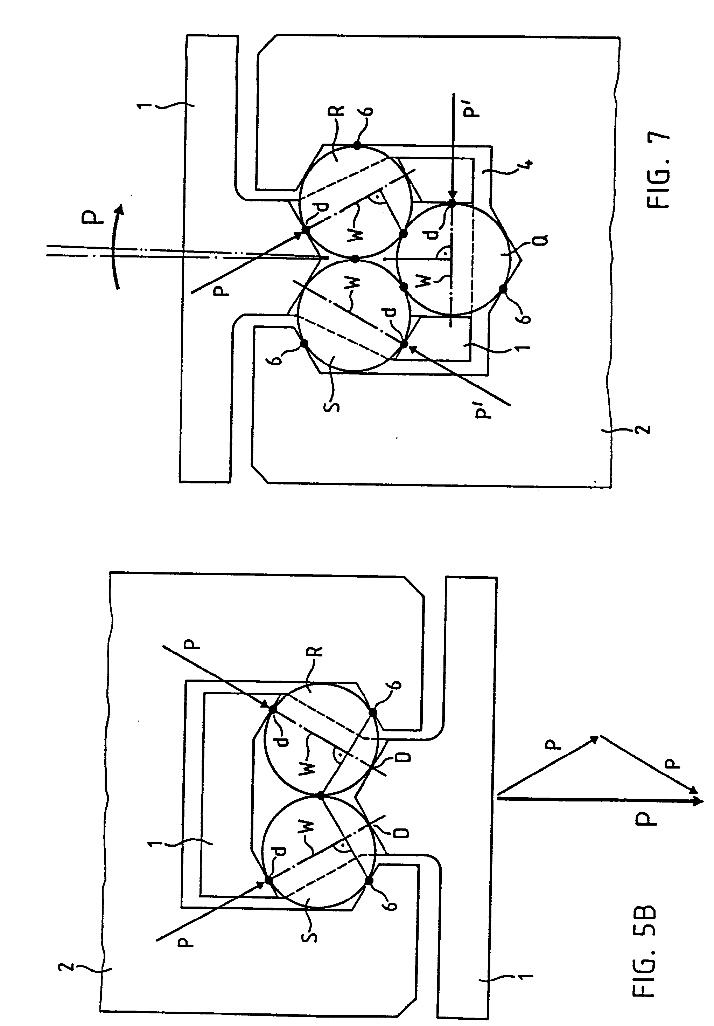

Ähnliches gilt auch für das in der norwegischen Patentschrift Nr. 56419 beschriebene Längsführungssystem, das mit voneinader separierten Kugelpaaren arbeitet. Das Längsführungssystem erlaubt eine Bewegung mit einem Minimum von Reibung, solange eine Lastkraft in einer ganz bestimmten Richtung darauf ausgeübt wird. In der folgenden Beschreibung soll im Zusammenhang mit der Figur 5B noch auf dieses System eingegangen werden.

Es gibt Wälzführungssysteme die aus einer Führungsschiene und zwei zugehörigen Führungsschlitten bestehen, die über einen Steg zu einem Führungswagen (Rollkörper) miteinander verbunden sind. Beim Verfahren des Führungswagens auf der Schiene, rollen die Kugeln (über eine Rücklaufrinne) in geschlossenen Kugelbahnen um. Solche Kugelumlaufelemente eignen sich für besonders grosse Hubstrecken und können in jeder Lage betrieben werden. Ganz problemlos sind solche Kugelumlaufbahnen jedoch nicht, bei Wälzkörperrückführungen müssen Wälzkörpereinlaufstösse vermieden werden, was einen entsprechenden technischen Aufwand bedeutet. Bspw. müssen die Kugeln mit einem konstanten Druck gegen die Führungskontaktflächen der Schiene gedrückt werden. Dies auch, um eine stick-slip-freie (Ruck-Gleit-freie) Verschiebbarkeit zu erhalten. Ferner müssen in der Regel profilgeschliffene Laufbahnen verwendet werden. So robust und bewährt diese Lösungen sind, sind sie doch aufwendig und teuer.

Für geringste Reibung gibt es Führungsschienen mit einreihigen Kugelflachkäfigen, die Wälzkörper stehen im Zweipunktkontakt zu den Laufbahnen. Diese Linearführungen passen sich optimal der Lastrichtung an und sind unempfindlich gegen Winkelfehler in der Querrichtung. Nicht geeignet sind sie für das Umfahren von Kurven. Verwendet werden vorzugsweise Nadelrollen, Zylinderrollen usw., mit denen in Flachkäfigführungen auch Loselagerungen möglich sind.

Generell betrachtet finden Kugellaufstäbe für Kugelführungen bei höheren Geschwindigkeiten und höheren Belastungen Anwendung. Rollenlaufstäbe sind für exakte Verstellbewegungen geeignet. Kugelführungen sind robust, Rollenführungen, inbesondere Kreuzrollenführungen, sind exakt (spielfrei).

Es ist Aufgabe der Erfindung, ein Längsführungssystem mit Rollkörpern und Rollkörperführung zu schaffen, das einen niedrigen Reibungsgesamtwiderstand derart aufweist, dass der Anteil des Rollwiderstands in allen üblichen Belastungsfällen überwiegt und der Reibungswiderstand des Rollkörpers ständig minimal gehalten ist. Ferner soll das Längsführungssystem im Gesamten einen möglichst hohen Materialanteil an Kunststoffen zulassen, ohne dass die Eigenschaften, die an Längsführungssysteme gestellt werden, beeinträchtigt werden. Daraus soll ein Längsführungssystem resultieren, das eine slip-stick-freie Verschiebbarkeit, geringsten Reibungswiderstand, unbeschränkt lange Verschiebungswege aufweist, dies bei einem bescheidenen Herstellungsaufwand unter Verwendung von kosten- und bearbeitungsgünstigen Materialien (wie bspw. Kunststoffen) und das zudem eine vielseitigere Verwendung zulasst, als die herkömmlichen Längsführungssysteme.

Diese Aufgabe wird durch die im kennzeichnenden Teil des Patentanspruchs 1 bzw. 3 bzw 9. definierte Erfindung gelöst.

Ein Längsführungssystem besteht, wie gesagt, aus einem Rollkörper und seiner Rollkörperführung. Der Rollkörper selber besteht wiederum aus relativ zu einander bewegten Teilen, ähnlich wie beim System Auto und Strasse, bei dem das Auto (vom Motor nun abgesehen) aus einem Sitzgehäuse und aus rollenden Rädern besteht. Das Problem liegt also auch darin, mit den Relativbewegungen innerhalb des Rollkörpers fertig zu werden.

Wie sich das Gewicht des Sitzgehäuses beim Auto auf die Achsen mit den daran angeordneten Räder (Wälzkörper) abstützt, muss sich der bspw. Kugelkäfig eines Rollkörpers auf die Wälzkörper abstützen können, um die Kraftwirkung auf die Führungsbahn zu bringen.

Die Erfindung basiert nun auf der Idee, dass wenn es gelänge, die Abstützung des bspw. Kugelkäfigs auf die Kugeln so zu gestalten, dass eine möglichst geringe Gleitreibung entsteht, so bliebe der wesentliche Anteil am Gesamt-Reibungswiderstand hauptsächlich auf die Rollreibung beschränkt, eine Art von Reibung, die bekanntermassen zu den widerstandsärmsten gehört. Es ist auch wesentlich einfacher eine Rollreibung technisch zu beherrschen als eine Gleitreibung.

Das reibungsarme Einkoppeln der von Kräften (bspw. einer Druckkraft) über zwei sich relativ zueinander bewegenden Körpern, also von einem Körper zum anderen, geschieht dann am günstigsten, wenn die Relativbewegung zwischen den Körpern nahe Null oder ganz Null ist. Bei rollenden Körpern ist dies ein Problem. So ist bei einer rollenden Kugel die Umfangsgeschwindigkeit nur am Drehpol, das ist der Ort an dem die Wälzachse austritt, und in seiner unmittelbaren Nähe Null oder sehr gering; doch kann diese Wälzachse bei einer Kugel, die als isotroper Körper angesehen werden kann, irgendwo, oder besser gesagt, in unendlich vielen Lagen vorliegen. Es ist also noch das Problem zu bewältigen, die Wälzkörper so zu beherrschen, dass ihre Wälzachsen beim Abrollen definiert im Raum liegen und zwar genau so, dass sich der bspw. Kugelkäfig in der engeren Region des Drehpols, das ist die drehungsinvariante Zone auf einer rollenden Kugel, abstützen kann und sich in verschiedenen Belastungfällen auch tatsächlich dort abstützt.

Die Erfindung löst dieses Problem so, dass zum kontrollierten Abwälzen von in einer Führung rollenden Wälzkörpern, insbesondere von Wälzkörpern mit hoher Symmetrie (Kugeln), wenn eine Lastkraft die Wälzkörper während des Abwälzens belastet, für mindestens zwei Wälzkörper, die Führung sowie für die Mittel zum Einkoppeln der Lastkraft auf die Wälzkörper, eine Anordnung gewählt wird, dass jeder Wälzkörper einerseits die Führung berührt und sich andererseits an einem Punkt gegenseitig berühren, wobei das Mittel zu Einkoppeln der Lastkraft einen Wälzkörper so berührt, dass die Kraftwirkung durch den Wälzkörper die Verbindungslinie zwischen den beiden Berührungspunkten zwischen Führung und Wälzkörper und Wälzkörper und Wälzkörper lotrecht trifft und mittig kreuzt, wobei die halbierte Verbindungslinie mit dem Wälzradius identisch ist.

Die Wälzradien sind dabei kleiner zu wählen, als der grösste halbe Durchmesser des Wälzkörpers.

Bei drei Wälzkörpern stehen die Führung sowie die Mittel zum Einkoppeln der Lastkraft, so zueinander angeordnet, dass jeder Wälzkörper die Führung berührt und sich an einem Punkt gegenseitig berühren, wobei das Mittel zum Einkoppeln der Lastkraft einen Wälzkörper so berührt, dass die Kraftwirkung durch die Wälzkörper eine Verbindungslinie zwischen den beiden Berührungspunkten zwischen Führung und Wälzkörper und Wälzkörper und Wälzkörper lotrecht trifft und mittig kreuzt, wobei die halbierte Verbindungslinie mit dem Wälzradius identisch ist.

Durch eine spezielle Anordnung von Wälzkörpern in einem Käfig und beim Abrollen zugleich auch eine Beziehung zu einem Führungskanal mit Kugellaufstäben, auf welchem die Wälzkörper sich abwälzen können, wird ein Längsführungssystem mit den genannten Vorteilen geschaffen . Obschon die geometrisch symmetrische Kugelform das am wenigsten lagedefinierte Verhalten zeigt, benützt die bevorzugte Ausfürungsform Kugeln als Wälzkörper. Es wird sich in der Diskussion der Ausführungsform zeigen, dass bei der Anwendung der vorgeschlagenen technischen Lehre sich ein kugelförmiger Wälzkörper über eine längere Betriebszeit stochastisch gleichmässig abnützt.

Einschlägigen Handbüchern lässt sich entnehmen, dass die Reibungszahl µ für reine Rollreibung Stahl (hart) auf Stahl (hart) 0,001 beträgt und für Gleitreibung Stahl auf Stahl 0,1 bis 0,15. Die ungefähr gleich aufgeteilte Mischreibung beider zwischen denselben harten Materialien beträgt 0,01 bis 0,015, das heisst, sie liegt ziemlich genau dazwischen. Konstruktiv versucht man an die möglichst reine Rollreibung heranzukommen, was natürlich zu entsprechenden Sachzwängen führt. Ein hoher Anteil an Rollreibung ist in einem Wälz- oder Nadellager gegeben, mit Vorbehalt ist dies auch in einem Kugellager der Fall, ebenfalls in Linearführungen, bei denen lediglich ein zylinderförmige Wälzkörper die Kraft zwischen den beiden sich relativ zueinander bewegenden Partnern vermitteln. Dabei ist aber zu beachten, dass die Rollreibung je nach dem widerstandsmässig eine bspw. systemimmanente Gleitreibung übertreffen kann.

Ein gemäss Erfindung ausgestaltetes Längsführungssystem macht von den Vorteilen einer Kugel als Wälzkörper speziell Gebrauch, wobei die anderen, weniger erwünschten Eigenschaften adäquat gezügelt werden. Beim Längsführungssystem gemäss Erfindung ist nicht, wie bei herkömmlichen Längsführungssystemen, eine Vorspannung nötig, damit muss auch keine Lagerluft eingestellt werden. Unbeschränkt lange Verschiebungswege können realisiert werden und Kräfte aus allen Querrichtungen und Momente um alle Achsen werden so aufgefangen, dass die Grundcharakteristik stets erhalten bleibt. Keine profilgeschliffenen Laufbahnen sind notwendig, ebenso benötigt man keinen Rollen- oder Kugelumlauf, der sich überall dort findet, wo grosse Hublängen benötigt werden.

Kugeln die in einem Käfig rollen, stützen sich während der Bewegung am Käfig ab. Geschieht diese Abstützung an einem Teil der Kugel mit (hoher) Umfanggeschwindigkeit, so resultiert dort eine Gleitreibung, die wohl erheblich zum gesamten Widerstand beiträgt. Somit ist es vorteilhaft, die auf die Kugelanordnung wirkende Käfigabstützung nur dort wirksam werden zu lassen, wo die Kugelumfanggeschwindigkeit gering oder nahe Null ist, das heisst, an jenen beiden Orten auf der rollenden Kugel, wo die Wälzachse austritt. Dies sind geschwindigkeitsinvariante Punkte oder Drehpole, die entsprechend der Abwälzung der Kugel irgendwo auf ihrer Oberfläche liegen können.

Eine Ausführungsform der Erfindung, die als Wälzkörper Kugeln benützt, wird nun mit Hilfe der nachfolgend aufgeführten Figuren im Detail diskutiert.
- Fig. 1A: zeigt einen Rollkörper gemäss Erfindung von vorne in einen Führungskanal eingeführt.
- Fig. 1B: zeigt den Wälzkörperkäfig für zwei Kugeltripletts in der Perspektive und im Schnitt durch ein Kugeltriplett wie in Figur 1A gezeigt.
- Fir. 1C: zeigt den Wälzkörperkäfig im Querschnitt, geschnitten im Bereich der Kugelmitte des Tripletts.
- Fig. 1D: zeigt eine bevorzugte Ausführungsform eines Laufbahnprofils in einem Führungskanal ohne Wälzkörperlaufstäbe perspektivisch dargestellt.
- Fig. 2A: zeigt eine aneinander gereihte Mehrzahl von Rollkörpern gemäss Figur 1A von der Seite gesehen. Der Führungskanal ist abgedeckt, das heisst, es ist nur die eine Hälfte sichtbar. Auf diese Weise lässt sich eine "Kette" von Rollkörpern zusammenstellen, die ihrerseits wieder ein Rollkörper ist.
- Fig. 2B: zeigt einen Rollkörper, der aus zwei Sub-Rollkörpern mit je einem Kugeltriplett und einem Verbindungssteg gebildet ist.
- Fig. 2C: zeigt eine weitere zusammengereihte Variante einer Mehrzahl von Rollkörpern.
- Fig. 3A: zeigt eine von der Kugel abstrahierte Darstellung der Kinematik des Rollkörpers.
- Fig. 3B: zeigt schematisch die "ausbalancierende" Wirkung auf das Kugeltriplett in Rollrichtung durch die Rollreibung zwischen zwei aufeinander und zugleich je auf einer Laufbahn rollenden Kugeln.
- Fig. 3C: zeigt schematisch das bevorzugte Muster der Abwälzpunkte zwischen den Kugeln eines Tripletts und zur Laufbahn.
- Fig. 4: zeigt die Aufteilung der Kräfte im Rollkörper bei einer Belastung von oben durch das Zentrum der Anordnung (Druckbelastung),
- Fig. 5A: zeigt die Aufteilung der Kräfte im Rollkörper bei einer Belastung von unten durch das Zentrum (Zugbelastung),
- Fig. 5B: zeigt eine gattungsähnliche Ausführungsform mit zwei Wälzkörpern für eine bestimmte Betriebsform, nämlich einer reinen Zugbelastung.
- Fig. 6: zeigt die Aufteilung der Kräfte im Rollkörper bei einer Belastung von der Seite durch das Zentrum (Seitenbelastung) und
- Fig. 7: zeigt die Aufteilung der Kräfte im Rollkörper bei einer tordierenden Belastung neben dem Zentrum vorbei (Drehbelastung).
- Fig. 8: zeigt eine Ausführungsform mit geschlossener, schlauchförmiger Rollkörperführung, in welcher die Rollkörper in Form einer Kette zusammengefügt sind.

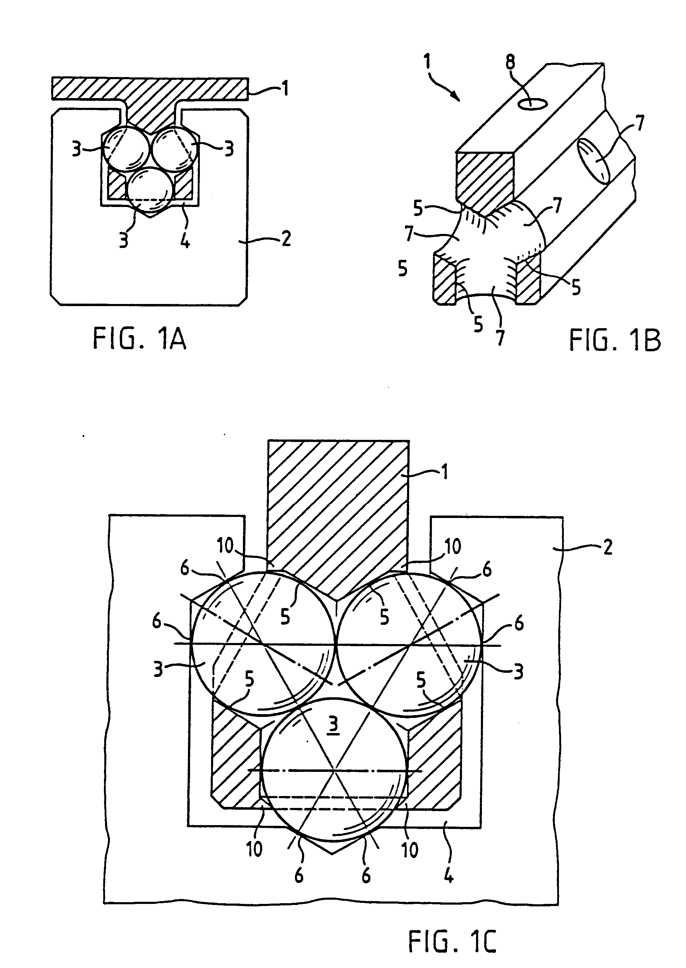

Wie **Figur** **1A** zeigt, ist ein Rollkörper 1 gemäss Erfindung als Grundelement so ausgestaltet, dass er sich in jeder Bewegungslage in sich selber, also auf seine drei Kugeln abstützt. Diese Grund-Anordnung besteht aus drei Kugeln 3, deren Zentren, über je zwei Kugelradien verlaufend, ein gleichseitiges Dreieck beschreiben. Die Kugeln wälzen sich aufeinander ab, das heisst, eine Kugel rollt auf der anderen, was, ohne auf eine Kugelumlaufstrecke angewiesen zu sein, einen unbegrenzten Hub ermöglicht. Jede Kugel weist vier mögliche Berührungspunkte zum Abwälzen auf. Jede Kugel kann an zwei Punkten auf Kugellaufbahnen 6 einer Schiene im Laufkanal 4 und an zwei Punkten mit je einem Punkt auf einer Partnerkugel aufliegen, so dass im Endeffekt für 3 Kugeln 9 (statt 12) mögliche Berührungspunkte resultieren. In den nachfolgenden Beispielen wird gezeigt, dass in verschiedenen Belastungsfällen 3 bis 6 dieser Berührungspunkte gleichzeitig zum Abstützen und Abrollen gleichzeitig benützt werden. Auf den Kugellaufbahnen 6 der Schienen im Laufkanal 4 sind die Auflagepunkte so weit voneinander beabstandet, wie die Auflagepunkte zu den beiden Partnerkugeln. Die Kugeln sind in einem Käfig (Fig. 1B) locker, also ohne Vorspannung zusammengefasst bzw. angeordnet. Dieser Käfig ist vorzugsweise in den Rollkörper-Körper integriert. Je nach Belastungsfall, von denen einige weiter unten noch diskutiert werden, kommen die Kugeln mit den Käfigwänden an Aufstützflächen 5 in Berührung, jedoch immer an einem geschwindigkeitsinvarianten Punkt, sodass die durch die Abstützung resultierende Gleitreibung minimal ist.

**Figur** **1B** zeigt den Wälzkörperkäfig mit (zweimal) drei Wälzkörperkammern 7, hier sind es Aufnahmebohrungen, für zwei Kugeltripletts in der Perspektive und im Schnitt durch die Kanäle in welchen ein Kugeltriplett, wie es in Figur 1A gezeigt ist, untergebracht werden kann. Die gezeigte Körperform ist so stark reduziert, dass er praktisch nur einen Kugelkäfig und einen stegförmigen Ansatz mit einer Befestigungsöffnung 8 zum Befestigen an einem anderen Rollkörperteil. In dieser Form ist der Rollkörper ein Sub-Rollkörper; wie später noch beschrieben wird, können eine Mehrzahl von Rollkörpern zu einem übergeordneten Rollkörper zusammengefasst werden.

**Figur** **1C** zeigt den Wälzkörperkäfig im Querschnitt, und zwar geschnitten im Bereich der Kugelmitte eines darin untergebrachten Kugel-Tripletts. Sichtbar sind hier Details wie Verjüngungen 10 der Bohrungen 7 an der Aussenseite, welche die Kugeln 3 in ihren Bohrungen gefangen halten. je nach verwendetem Material, bspw. bei POM (Polyoximethylen), ein Kunststoff aus der Gruppe der Polyacetale, welcher sich durch hohe Oberflächenhärte und gute Verschleisseigenschaften auszeichnet, erlaubt die Elastiztät des Materials, dass durch eine solche Verjüngung sich die Kugel durch den etwas kleineren Eingangsdurchmesser hindurchdrücken und in die Aufnahmebohrung einschnappen lässt. Ebenfalls sichtbar sind die Auflagepunkte 5 des Käfigs, mit welchem er sich auf die Drehpole der sich abwälzenden Kugeln 3 abstützt. Der Rollkörper selber läuft mit seinen Wälzkörpern Schienen entlang, die in Form von Kugellaufstäben 6 im Führungskanal 4 der Führungsschiene 2 angeordnet sind.

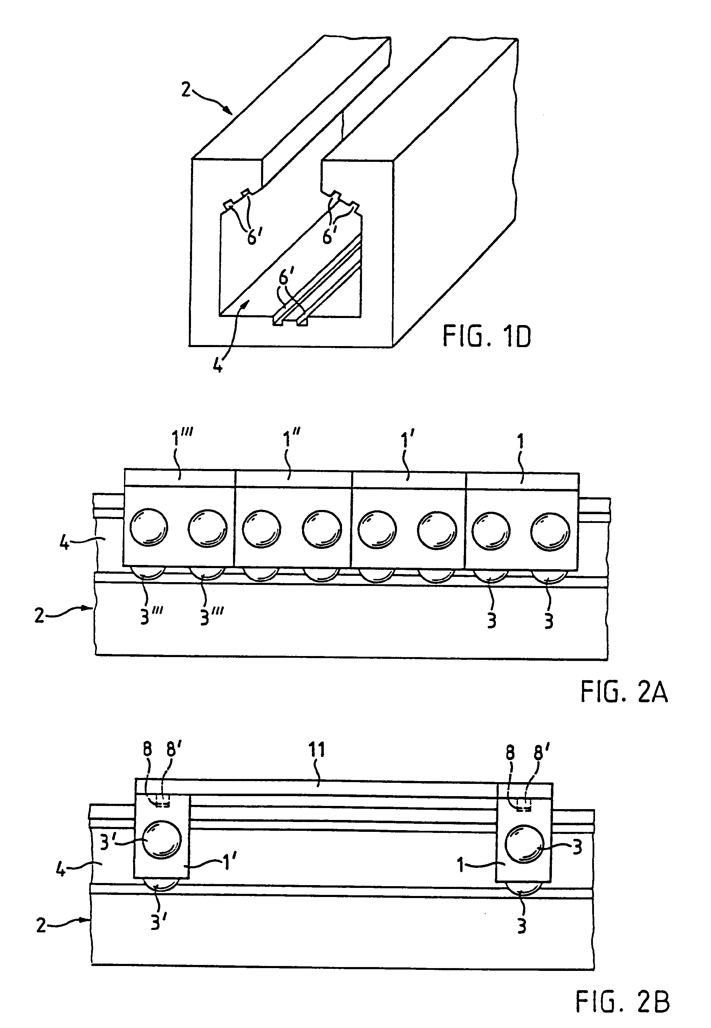

**Figur** **1D** zeigt eine bevorzugte Ausführungsform eines Laufbahnprofils für einen Führungskanal in einer Führungsschiene in perspektivischen Darstellung. Passend dazu ist der Wälzkörperkäfig in Figur 1B. Sichtbar sind drei schräg zueinander stehende Betten für Schienen mit Nuten 6' zur Aufnahme von je zwei Kugellaufstäben 6, auf welchen die Kugeln 3 des Rollkörpers 1 abrollen können. Die Schienen, die in die Betten eingelegt werden, sind vorzugsweise mit flachen Laufflächen ausgestattet, sodass die Kugeln, die die Schienenoberfläche an einem Punkt berühren, auf dieser Fläche, entsprechend dem momentanen Lastangriff, "ihre Bahn" fahren können. Mit flachen Schienen kann die Toleranz zwischen den Kugeln, dem Gehäuse und den Schienen selber grösser sein. Verwendet man Schienen mit gebogener Lauffläche so müssen die Toleranzen geringer sein.

**Figur** **2A** zeigt, von der Seite her gesehen, eine lineare Anordnung von einzelnen Rollkörpern 1, 1', 1'' usf., die jeweils zwei Kugeltripletts enthalten. Solche Anordnungen können beliebig zusammengestellt und/oder beliebig miteinander verbunden werden. Mit bspw. einer elastischen Verbindung zwischen den Rollkörperelementen, können diese auch zu einer rollenden Kette zusammengefügt werden. Bei solchen Kettenrollkörpern mit Rollkörperelementen, die nur ein Triplett aufweisen, sind Führungen mit relativ kleinen Kurvenradien realisierbar, sodass der Rollkörper gemäss Erfindung auch in der Kettenförderung, bei der die Förderung in allen Raumrichtungen erfolgen soll, vorteilhaft eingesetzt werden kann. Statt der Laufstäben kann auch die Oberfläche des Führungskanals direkt zum Abrollen der Kugeln verwendet werden, insbesondere dann, wenn man für den Führungskanal ein Metall-Profil einsetzt.

**Figur** **2B** zeigt eine andere Variante, wie Rollkörper als Subelemente eingesetzt werden können. Zwei Rollkörper 1 und 1' mit je einem Kugeltriplett, sind starr über einen Steg 11 miteinander verbunden und bilden so einen Rollkörper für eine kurvengängige Längsführung. Mit den Ziffern 8 und 8' sind die Befestigungsmittel bezeichnet, die, wenn gewünscht, auch als eine Drehlagerung, Zapfen in Bohrung, ausgestaltet sein können. Mit diesem Beispiel soll andeutungsweise gezeigt werden, wie ausserordentlich vielseitig der diskutierte Rollkörper verwendet werden kann.

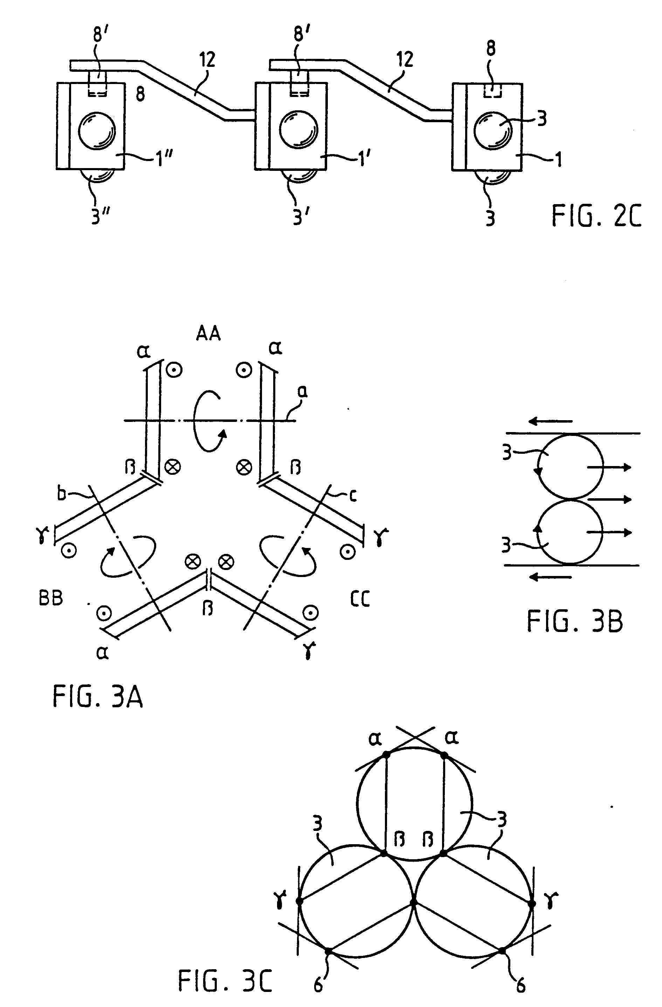

Eine weitere Möglichkeit der vielseitigen Verwendbarkeit zeigt die Zusammenreihung von Rollkörpern in **Figur** **2C**. Jeder Rollkörper 1,1',1'' hat an seinem Wälzkörperkäfig einen Lenker 12 mit einem nach unten gerichteten Zapfen 8' und oben auf dem Wälzkörperkäfig eine Zapfenbuchse 8 angeordnet, derart, dass der Zapfen eine Lenkers in die Zapfenbuchse eines folgenden Wälzkörperkäfigs eingeführt werden kann und sich so eine Kette bildet.

**Figur** **3A** zeigt eine von der Kugel abstrahierte Darstellung zur Diskussion der kinematischen Verhältnisse eines solchen Rollkörpers. Drei An- oder Abtriebsgruppen 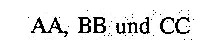
bestehen aus je einer Welle a,b und c, auf welcher Welle je zwei Zahnräder angeordnet sind. Diese Zahnräder stehen an den Angriffspunkten 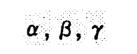
untereinander oder mit der Aussenwelt im Eingriff. Die Punkte 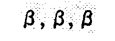
sind Übergangspunkte der Zahnräder von einer Gruppe auf die andere und die Punkte 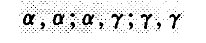
sind Übergangspunkte vom Rollkörper nach aussen auf die Schienen der Bahnführung. In diesem Beispiel ist AA eine Antriebsgruppe und BB, CC sollen Abtriebsgruppen sein. Somit ist a die angetriebene Achse. Zur besseren Anschaulichkeit ist die Drehrichtung nebst Drehpfeilen auch mittels senkrecht zur Papierebene stehenden Vektoren dargestellt (Punkt im Ring nach oben und Kreuz im Ring nach unten gerichtet). Somit ist die Drehrichtung an den Punkten 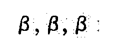
in die Papierebene hinein und an der Peripherie, an den Punkten 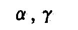
aus der Papierebene heraus, sodass der Rollkörper als Ganzes in die Papierebene hineinrollt, oder anders ausgedrückt, bspw. in einer auf der Papierebene stehenden vertikalen Führung durch sein Eigengewicht nach unten rollen (fallen) würde.

Hier sieht man nun klar, dass sich die drei Radpaare mit den Eingriffspunkten 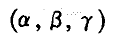
wie ein Getriebe verhalten, das auf sich selber abrollend eine Bahn entlang zu rollen fähig ist. Nimmt man die Abstraktion wieder zurück, in welcher die einzelnen Zahnräder aus der Kugel herausgeschnittene Scheiben darstellten und ergänzt sie wieder zu Kugeln, so sieht man auch hier, dass die drei Kugeln, bei isotropem Kraftangriff aufeinander abrollend eine Bahn zu rollen fähig sind ohne aneinander oder auf einer der drei Schienen mit den zwei Kugellaufstäben zu gleiten. Die Kugeln stützen sich gegenseitig nur auf einem Punkt ab, in diesem Punkt entsteht Rollreibung, die sich, wie bei der Rollreibung auf den Schienen, entgegen der Abrollrichtung hemmend auswirkt.

In **Figur** **3B** ist dargestellt, wie sich die Rollreibung zweier aufeinander abrollender Kugeln 3, die sich in einer Führung vorwärts bewegen, so ungefähr die Waage hält. Dies bewirkt, dass sich das Kugeltriplett, wenn es nicht systematisch destabilisiert wird, auch nicht unkontrolliert auf die Käfigwände aufstützt und dort unkontrolliert (Gleit-) Reibung erzeugt. Dies würde bei einer dauernden Abstützung auf eine Kugelzone mit höherer Umfangsgeschwindigkeit der Fall sein, kurzfristige, momentane Abstützungen dieser Art, die bei einer Destabilisation auftreten können, dürfen nicht andauern. Das Kugeltriplett soll also fähig sein, sich beim Abrollen auch in Laufrichtung zu stabilisieren. Ein auf die gezeigte Weise abrollendes Rollkörpertriplett weist, was auch Versuche zeigen, ein Minimum an Gleitreibung auf.

**Figur** **3C** zeigt ferner noch, ebenso schematisch und in Anlehnung an Figur 3A, eine vorzugsweise Anordnung der Kugellaufstäbe in Bezug zu den Kugeln des Tripletts, nämlich derart, dass der Abstand α-α der Laufstäbe einer Schiene gleich dem Abstand β-β der Berührungspunkte zu den beiden Partnerkugeln. Die Abrollpunkte α sind am Ort der Kugellaufstäbe 6, die im unteren Teil der Figur angezeigt sind.

Bei der genannten Anordnung im Dreieck, sind die Wälzradien aller drei Kugeln stets gleich gross. Daraus resultiert eine gleiche Umfangsgeschwindigkeit aller rollenden Kugeln, wodurch die Gleitreibung zwischen den Kugeln praktisch Null ist. Ferner wird die von aussen wirkende Kraft auf die Kugelanordnung stets so aufgeteilt, dass der Kraftangriff immer durch die Wälzachse hindurch verläuft und damit derart auf die Laufschienen im Kugelkanal verteilt wird, dass der Kugelkäfig keine das Triplett deplazierende Kräfte aufnehmen muss. Es ist also, wie schon gesagt, ein rollendes Kugeltriplett.

Die Kugeln im Nichtbetriebsfall, also ausserhalb des Führungskanals sind locker in einem Käfig gelagert und nur gegen Herausfallen gesichert. Der Käfig kann aus Metall oder aus Kunststoff bestehen, wobei die Härte des verwendeten Materials erheblich ist, weil er bei einer Belastung der Kugeln an dieser Belastung gleichermassen teilnimmt. Die vom Käfig in den Drehpol eingekoppelte Kraft wird stets über zwei Kugeln auf den Laufkanal übertragen, der für jede Kugel eine Laufschiene mit zwei Auflagepunkten (auf den Kugellaufstäben) aufweist. Der Käfig sitzt also auf Drehpolen der Kugeln auf, sodass die Kugeln keiner grösseren Reibung ausgesetzt sind, als durch die Grösse der Kalottenflächen, die sich bilden, wenn sich die Kugeln in die Käfigwände drücken lassen. Dort jedoch, wo sich der Käfig, gezwungenermassen, auf dem Triplettkörper abstützen muss, ist jeweils die Kugeloberflächengeschwindigkeit praktisch Null, da sich der Käfig auf den drehungsinvarianten Teil der Kugel abstützt und die Gleitreibung dort natürlich nahe Null sein muss (entsprechend der durch die Einsenkung gebildeten Kalottenfläche).

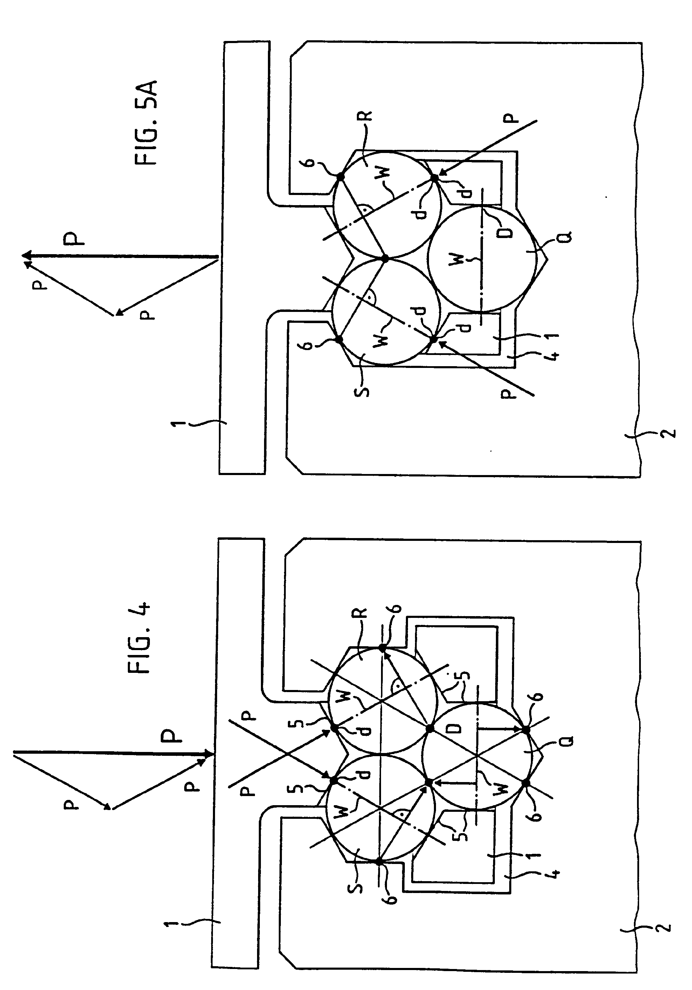

Anhand der Figuren 4 bis 7 und in Anlehnung an die Figuren 1A und 1C werden nun einige Belastungsfälle des diskutierten Rollkörpers im Führungskanal untersucht. Für die Zerlegung der Kräfte wird eine Vektordarstellung benützt, deren Summenvektor als ein dick gezeichneter Pfeil und deren Teilvektoren als dünn gezeichnete Pfeile gezeichnet sind. Die als Vektor dargestellt Kraft wird in zerlegter Form auf die Punkte im Rollkörper gerichtet, an welchen sie wirksam sind.

**Figur** **4** zeigt die Belastung eines Rollkörpers von oben, das heisst, er wird in die Rollkörperführung mit den Laufschienen hineingedrückt, wobei sechs der möglichen neun Berührungspunkte beteiligt sind. In diesem Belastungsfall wird die untere Kugel Q gegen die beiden Kugellaufbahnen 6 ihrer Schiene gepresst. Zugleich stützt die sich an den beiden anderen Kugeln R und S ab und versucht die "auseinanderzutreiben". Damit werden diese beiden Kugeln ihrerseits an die Kugellaufbahnen ihrer Schienen gepresst, wobei sich das Triplett zwischen Schienen und Kugeln verfestigt. Dabei stützen sich die Kugeln, je nach Belastungsfall auf nur einen oder auf beide Laufbahnen ab, (dies ist jeweils mit einem verstärkt gezeichneten Punkt dargestellt). Die Wälzachse W der Kugel Q ist horizontal (quer zur Laufrichtung) und die Wälzachsen W der beiden anderen Kugeln R und S sind in einem Winkel von 60° dazu einander zugeneigt, liegen also im wesentlichen auf einem gleichseitigen Dreieck. Der Käfig, der bei Nichtbelastung relativ locker um das Triplett liegt, stützt sich nun an den Punkten d der oberen beiden Drehpole der Kugeln R und S auf das Triplett ab (verstärkt gezeichnete Punkte). Sehr gut kann man hier sehen, dass die Wälzradien zu den Berührungspunkten Kugel/Kugel und Kugel/Schiene bei allen drei Kugeln gleich gross sind. Ebenso gut kann man sehen, wie die Kräfte auf diese Angriffspunkte symmetrisch aufgeteilt sind. Ein solch symmetrisches Gebilde, wie dieses Triplett es ist, ist in der Lage, alle möglichen Kraftangriffe von aussen dergestalt aufzuteilen, dass jeweils ein für den Gesamtreibwiderstand günstiges Verhältnis von hohem Rollreibungsanteil zu kleinem Gleitreibungsanteil resultiert. Gleichwohl sich die Kugeln, wie oben schon gesagt, entweder auf nur einen oder auf beide Laufstäbe abstützen, die Lage der Wälzachse und die Grösse der Rollradien bleiben stets gleich.

**Figur** **5A** zeigt einen Kraftangriff, der versucht, den Rollkörper aus seinem Führungskanal herauszuziehen, dies kommt bspw. in einem reinen Hängebetrieb vor, wobei drei der möglichen neun Berührungspunkte beteiligt sind. Die beiden Kugeln R und S stützen sich auf ihren Kugellaufbahnen 6 ab und entlasten gleichzeitig die Kugel Q. Diese ist bei diesem Kraftangriff weder vom Walzkörperkäfig noch von einer der Partnerkugeln belastet und rollt unbelastet mit. Der Wälzkörperkäfig stützt sich auf die beiden drehungsinvarianten Punkte d der nun gegenüberliegenden Drehpole der beiden Kugeln R und S ab. Die beiden Wälzachsen W stehen dabei genau so im 60°-Winkel zueinander, wie dies im Belastungsfall nach **Figur** **4** auch der Fall war. Die Wälzradien sind ebenfalls gleich gross, sodass die beiden belasteten Kugeln die gleiche Umfanggeschwindigkeit aufweisen und auch bei diesem Belastungsfall ebenfalls nur eine sehr geringe Mischreibung zu erwarten ist. Die dritte, unbelastete Kugel Q liegt im Falle eines Hängebetriebs (nicht aber im Betriebsfall, in welchem nach oben gezogen wird) auf den beiden Partnerkugeln und rollt auf diesen ab, ohne an der Krafteinwirkung teilzunehmen.

Nur auf Grund dieses speziellen Belastungsfalles, wie er in Figur 5A dargestellt ist, lässt sich eine gattungsähnliche Ausführungsform mit nur zwei Kugeln ausbilden, eine Ausführungsform, mit welcher ein Hängeförderer ausgestaltet werden kann, wobei hier ebenfalls drei der möglichen neun Berührungspunkte beteiligt sind. Dies ist jedoch ein Spezialfall für eine Betriebsform, in welcher reine Zugbelastungen quer zum Führungskanal auftreten.

Diese gattungsähnliche Ausführungsform zeigt Figur 5B. Die Ausnehmung, die gemäss Figur 5A für die Kugel Q vorgesehen ist, fällt hier weg, ebenso die für diese Kugel vorgesehene Schiene mit den zwei Kugellaufstäben in der Rollkörperführung. Der Wälzkörperkäfig birgt nun statt eines Wälzkörpertripletts, ein Wälzkörper-Duplett. Daraus können bspw. für einen Hängeförderer Ketten gebildet werden, die entweder elastisch biegsam oder gelenkig zusammengefasst sein können, gleich wie es bei den Rollkörper-Tripletts auch empfohlen wird. Die Kräftezerlegung unter Belastung enstpricht der in Figur 5A diskutierten und muss hier nicht mehr eingehend besprochen werden.

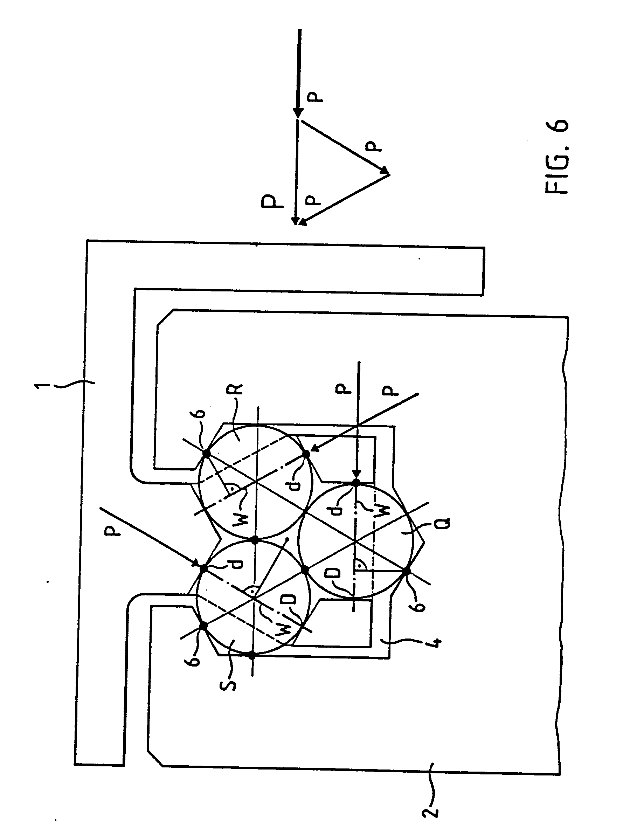

**Figur** **6** zeigt einen Belastungsfall, bei dem die Führung 2 seitlich an den Rollkörper 1 oder dieser links gegen die Führung gepresst wird, wobei sechs der neun möglichen Berührungspunkte beteiligt sind. Dieser Belastungsfall tritt zum Beispiel bei Einwirkung von Zentrifugalkräften auf, wobei allerdings der Schwerpunkt des Rollkörpers im Führungskanal liegen müsste. Es wird dieser Belastungsfall jedoch mehr deswegen diskutiert, um methodisch aufzuzeigen, dass auch die tatsächlich vorkommenden Mischformen von Belastungen der gleichen Charakteristik folgen, wie die hier idealisiert dargestellten, Belastungsfälle. Hilfsweise und zum besseren Verständnis ist der Wälzkörperkäfig um einen Winkel erweitert worden, auf welchen die Kraft so gerichtet ist, dass sie genau auf das Zentrum des Tripletts wirkt.

Die Kugellaufbahnen der Kugel S drücken die Kugel gegen die beiden Kugeln R und Q, die, wie in den beiden vorigen Fällen gezeigt, jeweils gegen die Kugellaufbahnen 6 der eigenen Schiene gepresst werden, wodurch sich das Triplett stabilisieren kann. Die Kraft wirkt so, als würde der Rollkörper von rechts her gegen die Führung gepresst, sodass sich der Käfig, was mit den Pfeilen der verwendeten Vektordarstellung angegeben ist, an drei Punkten d auf die Kugeln abstützt, nämlich auf je einen Drehpol D einer Kugel. Mit D ist wie in den anderen Figuren der allgemeine Drehpol eines Wälzkörpers bezeichnet.

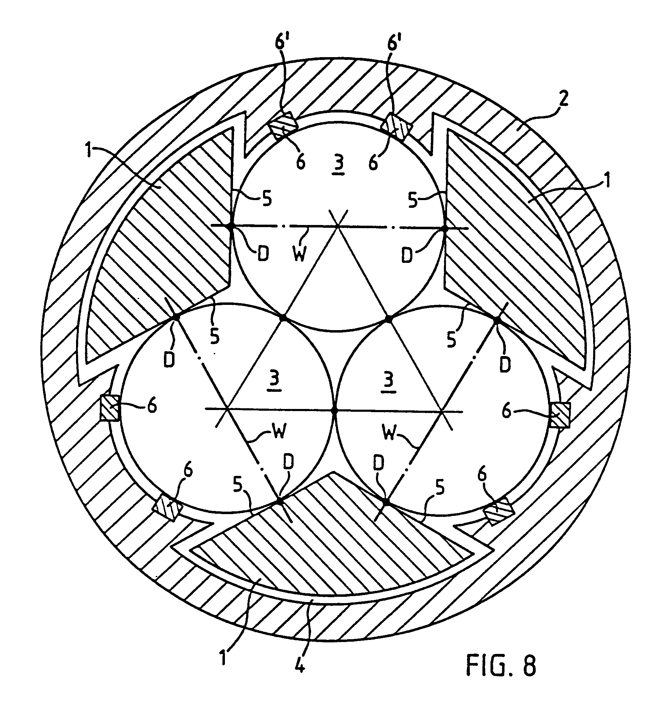

**Figur** **7** zeigt schliesslich noch einen Belastungsfall, gemäss welchem die auf den Rollkörper wirkende Kraft diesen in seinem Führungskanal zu verkanten (achsial verdrehen) versucht, wobei sechs der neun möglichen Berührungspunkte beteiligt sind. Eine solche Verkantung hat wiederum die ähnliche Wirkung auf Kugeln, Schienen und den Käfig, wie einer der vorher gezeigten Kraftangriffe auf das Längsführungssystem. Sobald eine der drei Kugeln durch den Druck des Käfigs auf einen ihrer Drehpole belastet wird, teilt sie die auf sie wirkende Kraft den beiden Partnerkugeln über ihre Rollpunkte mit, um einen Teil der Kraft übernehmen und sie auf die ihnen zuständigen Schienen ableiten. Dies führt, wie schon dargestellt, jeweils zu einer Verfestigung des rollfähigen Kugeltripletts, auf dessen Drehpolen sich der Käfig an drei Punkten abstützt. In diesem Falle geht der Kraftangriff vom Käfig auf die Kugeln des Tripletts auf die Punkte d der Drehpole reihum, sodass sich das über der Figur eingezeichnete Drehmoment, das den Rollkörper im Führungskanal zu drehen versucht, durch die Kraftführung durch quasi alle Wälzachsen hindurch ausbildet.

**Figur** **8** zeigt noch eine Ausführungsform eines Längsführungssystems, bei der die Rollkörperführung rundum geschlossen ist und eine Kette von Rollkörpern rohr- oder schlauchförmig umgibt. Mit dieser Ausführungsform soll noch einmal auf die eindrückliche Vielseitigkeit des erfinderischen Systems und die daraus ableitbaren Konstruktionsmöglichkeiten hingewiesen werden. Sie wird auch hier erst gezeigt, nachdem die verschiedenen Belastungsfälle schon besprochen sind und sich darüber keine speziellen Gedanken mehr gemacht werden müssen.

Hier handelt es sich um eine neuartige, als Rollkörper ausgebildetet Kette, die in einer geschlossenen Fürhung läuft und mit der Kräfte auf einer beliebigen räumlichen Bahn axial übertragen werden können. Diese Längsführung kann starr oder biegbar sein, je nach Wahl bzw. Härte des verwendeten Werkstoffes.

So zeigt **Figur** **8** ansatzweise eine Möglichkeit, wie ein Rollkörper in einer rundum geschlossenen Rollkörperführung 2 angeordnet sein kann. Ein Kugeltriplett mit den drei Kugeln 3 ist in einem Wälzkörperkäfig 1 angeordnet. Die Drehpole D, an denen die Wälzachse W austritt, stützen sich auf die Flächen 5 der Wälzkörperkäfig 1 ab. In Nuten 6' in der Rollkörperführung 2 sind als Schienen Kugellaufstäbe 6 eingelassen, auf denen die Kugeln 3 abrollen. Wie im Zusammenhang mit Figur 1D diskutiert, kann man bevorzugterweise auch hier statt runder Laufstäbe 4- oder mehrkantige Laufstäbe einziehen, um den Kugeln eine flache Rollbahn zur Verfügung zu stellen. Diese Rollbahn muss durchaus nicht breit sein, lediglich so breit, um die "Schlängelbahn" die durch die Gesamttoleranz und durch die wechselnden Kraftangriffe resultiert.

Die Rollkörperführung 2 kann bspw. im Strangguss- oder einem Extruderverfahren hergestellt und die Schienen anschliessend eingezogen oder sogar im gleichen Arbeitsgang mit eingegossen werden. Die Wälzkörperkäfige mit den Wälzkörpern sind entweder flexibel biegbar oder gelenkig verbunden, wenn Kurvengängigkeit gefordert ist, aber auch eine starre Verbindung zwischen zwei oder mehreren Rollkörpern kann eine der gesuchten Lösungen sein. Der hier dargestellte Ansatz wird sich mehr für eine starre Konstruktion als für eine flexible eignen, im Prinzip ist jedoch auch hier das erfingungsgemässe System lediglich methodisch konsequent weiterentwickelt worden, um zu dieser Lösung zu gelangen.

Ein gemäss der Erfindung ausgebildetes Längsführungssystem mit Rollkörper und Rollkörperführung kann Aufgaben erfüllen, die bekannte, ausschliesslich aus Metall gefertigte Längsführungssysteme mit Kugeln oder anderen Wälzkörpern erfüllen, wenn eben solche Materialien verwendet werden. Wird Metall und Kunststoff verwendet, so entstehen Längsführungssysteme, die entweder kostengünstig und/oder leichtgewichtig oder mit anderen Eigenschaften ausgestattet sind, als die vorgenannten. Wird eine besondere Beweglichkeit verlangt, so kann sie mit dem vorgeschlagenen Verfahren und einer der vorgeschlagenen Ausführungsformen ebenso realisiert werden.

Bei den hier gezeigten Ausführungsformen kommt es weniger auf deren Verwendungszweck als auf die vielen Möglichkeiten an, die mit dieser Lehre geschöpft werden können. Dazu gehört auch die Ausführungsform von Figur 8.

Es ist klar, das im realen Betrieb einer oder alle diese diskutierten Fälle von Kraftangriff und auch deren Mischformen in schneller Folge abwechselnd auftreten können. Man sieht aber, dass jeder Kraftangriff auf den Rollkörper stets in Richtung der Wälzachsen der Kugeln übertragen wird, das heisst, dass Teilkräfte über die Drehpole in die Kugel eingekoppelt werden. Die so belastete Kugel wälzt sich dann über die 2 mal 2 Punkte von Schiene und Partnerkugeln ab. Der Reibungswiderstand setzt sich aus der Rollreibung von 9 (nicht 12!) Rollauflagepunkten und der Gleitreibung von 2 bis 3 Drehpolpunkten zusammen. Da die Rollreibung, wie im Zusammenhang mit **Figur** **3B** erklärt, das Triplett in der bis anhin noch nicht besprochenen "Papierebene" in Balance hält und diese Balance lediglich durch Störungen im Rollablauf, bspw. durch positive/negative Beschleunigungen (Stösse, Erschütterungen, Brems- und Beschleunigungsvorgänge) kurzfristig aufgehoben wird, um sich aber gleich wieder einzustellen, muss dem "berechenbaren" Reibungswiderstand noch ein "akzidenteller" Gleitreibungswiderstand zugerechnet werden, der sich jedoch nur empirisch bestimmen lässt und sich bei Versuchen als nicht wesentlich einstufen lässt.

Wie die **Figuren** **2A,** **2B,** **2C** andeutungsweise zeigen, können solche Triplettrollkörper beliebig aneinander gereiht werden. Ein Kugelkäfig ist nicht viel breiter als der Durchmesser der verwendeten Kugeln, sodass ein solcher Rollkörper eigentlich verhältnismässig klein ist. Verbindet man eine Mehrzahl von solchen Rollkörpern durch eine gelenkige oder eine elastische Verbindung, so lässt sich eine in ihrer Führung überraschend leicht rollende Kette herstellen, die bspw. für einen Kettentransporter sehr geeignet ist. Wird bei einem Kettentransporter der üblichen Bauart die Kette durch den Führungskanal geschoben oder gezogen, so entstehen erhebliche Gleitwiderstände, die durch den Einsatz von Schmiermitteln gemindert werden müssen. Diese Gleitwiderstände sind schliesslich auch für die Länge des Kettentransporters limitierend. Es ist klar, dass bei einer aus den vorgeschlagenen Rollkörpern gebildete Kette ein Einsatz von Schmiermitteln nicht entscheidend ist und dass keine in einem Kanal gleitende Kette einen nur annähernd so geringen Widerstand aufweist wie die in ihrem Kanal rollende Kette.

## Patentansprüche

1. **Längsführungssystem**, das eine **Rollkörperführung** (2) und wenigstens einen darin geführten **Rollkörper** (1) aufweist, wobei im Rollkörper wenigstens ein integrierter Wälzkörperkäfig, in welchem in Ausnehmungen (7) Wälzkörper (3) angeordnet sind, die sich gegenseitig berühren, und Mittel (5) zum Einkoppeln einer Lastkraft angeordnet sind, und die Rollkörperführung (2) einen Führungskanal (4) mit Schienen zum Abrollen der Wälzkörper aufweist, wobei die Rollkörperführung (2) für jeden Wälzkörper (3) eine Schiene angeordnet enthält, wobei die Schienen so zueinander angeordnet sind, dass zwei Verbindungslinien vom Auflageort je eines Wälzkörpers auf seiner Schiene zum Berührungspunkt der beiden Wälzkörper einen stumpfen Winkel bilden, und wobei in den Ausnehmungen (7) im Wälzkörperkäfig für jeden Wälzkörper (3) als Mittel zur Einkoppelung einer Lastkraft mindestens eine Abstützfläche (5) vorgesehen ist, die so angeordnet ist, dass das Lot durch diese Abstüzfläche (5) im wesentlichen auch lotrecht auf der Verbindungslinie vom Auflageort des Wälzkörpers (3) auf seiner Schiene zu einem der Berührungs- bzw. Abrollpunkte dieses Wälzkörpers auf einem anderen Wälzkörper steht und diesen mittig kreuzt, **dadurch** **gekennzeichnet**, dass in dem Wälzkörperkäfig, bzw. in den Wälzkörperkäfigen drei sich gegenseitig berührende Wälzkörper als Wälzkörpertriplett angeordnet sind.

2. Längsführungssystem nach Anspruch 1, dadurch gekennzeichnet, dass die Schienen in der Laufkörperführung derart mit Auflageflächen ausgestaltet sind, dass jeder Wälzkörper mit zwei Punkten auf der Schiene aufliegt, dass in den Ausnehmungen (7) im Wälzkörperkäfig für jeden Wälzkörper (3) zwei einander gegenüberliegende Abstützflächen (5) vorgesehen sind, und dass die Schiene und die Auflageflächen derart ausgestaltet sind, dass das Lot durch die Abstützflächen (5) im wesentlichen auch lotrecht auf zwei Verbindungslinien von je einem Auflageort des Wälzkörpers (3) auf seiner Schiene zu einem Berührungs- bzw. Abrollpunkt des Wälzkörpers mit einem anderen Wälzkörper stehen.

3. **Rollkörper** zum Längsführungssystem nach einem der Ansprüche 1 oder 2, wobei jeder Wälzkörperkäfig in einer Ebene angeordnete Ausnehmungen (7) aufweist, die ineinander übergehen und in welche Stützflächen (5) integriert sind, die zueinander um einen stumpfen Winkel geneigt sind und dazu dienen, je einen Wälzkörper (3) aufzunehmen bzw. abzustützen, dadurch gekennzeichnet, dass jeder Wälzkörperkäfig drei Ausnehmungen (7) aufweist und dass die Stützflächen (5) zueinander um einer Winkel von 120° geneigt sind.

4. Rollkörper nach Anspruch 3, dadurch gekennzeichnet, dass die Wälzkörper (3) Kugeln sind.

5. Rollkörper nach einem der Ansprüche 3 oder 4, dadurch gekenn- 30 zeichnet, dass der Wälzkörperkäfig aus einem weicheren Material besteht als die Wälzkörper.

6. Rollkörper nach einem der Ansprüche 3 bis 5, dadurch gekennzeichnet, dass die Aussenmündung (10) der Ausnehmungen (7) zur Aufnahme der Wälzkörper (3) sich im Querschnitt unter den grössten Querschnitt des Wälzkörpers verjüngen, derart, dass ein Walzkörper (3) in der Ausnehmung (7) gefangen sein kann.

7. Rollkörper nach Anspruch 5 und 6, dadurch gekennzeichnet, dass die Querschnittsverjüngung so bemessen und der Werkstoff für den Wälzkörperkäfig so gewählt ist, dass sich die Wälzkörper von aussen durch Druck in die Ausnehmung einbringen bzw. einschnappen lassen.

8. Rollkörper nach einem der Ansprüche 3 bis 7, dadurch gekennzeichnet, dass in einem Rollkörper (1) mindestens zwei Wälzkörperkäfige mit ihren zugehörigen drei Wälzkörpern vorgesehen sind.

9. **Rollkörperführung** zum Längsführungssystem nach Anspruch 1 oder 2, wobei die Laufschienen zueinander in einem stumpfen Winkel angeordnet sind, dadurch gekennzeichnet, dass die Laufschienen in einem Winkel von im wesentlichen 120° zueinander angeordnet sind und jede Schiene im wesentlichen aus zwei parallel verlaufenden Wälzkörperlaufstäben (6) besteht.

10. Rollkörperführung nach Anspruch 9, dadurch gekennzeichnet, dass die Schienen aus einem härteren Material gefertigt sind als der Führungskanal.

11. Rollkörperführung nach einem der Ansprüche 9 oder 10, dadurch gekennzeichnet, dass die Rollkörperführung (2) rundum geschlossen ist und in gleich grossen Winkelabständen Schienen mit Wälzkörperlaufstäben (6) aufweist.

12. Längsführungssystem nach Anspruch 1 oder 2 unter Verwendung von Rollkörpern (1) nach einem der Ansprüche 3 bis 8 in Führungen (2) nach einem der Ansprüche 9 bis 11, dadurch gekennzeichnet, dass eine Mehrzahl von Rollkörper, in einer Rollkörperführung verwendet werden.

13. Längsführungssystem nach Anspruch 12, dadurch gekennzeichnet, dass die aneinandergereihten Rollkörper (1) elastisch biegsam oder gelenkig miteinander verbunden sind.

## Claims

1. Longitudinal guide system, which has a rolling member guide (2) and at least one rolling member (1) guided therein, in which in the rolling member are provided at least one roll body cage, in which roll bodies (3) are located in recesses (7), said roll bodies being in contact with one another, and means (5) are provided for coupling in a load force and the rolling member guide (2) has a guide channel (4) with rails for the rolling of the roll bodies, the rolling member guide (2) containing for a rail for each roll body (3), the rails being so associated with one another that two connecting lines from the bearing point of in each case one roll body on its rail to the contact point of the two roll bodies form an obtuse angle and in which the recesses (7) in the roll body cage for each roll body (3) as the means for coupling in a load force is provided at least one supporting surface (5) arranged in such a way that the perpendicular through said supporting surface (5) is substantially also perpendicular on the connecting line from the bearing point of the roll body (3) on its rail to one of the contact or rolling points of said roll body on another roll body and centrally intersects the same, characterized in that in the roll body cage or cages are provided three reciprocally contacting roll bodies (3) as a roll body trio.

2. Longitudinal guide system according to claim 1, characterized in that the rails in the roll body guide are constructed with bearing surfaces in such a way that each roll body rests with two points on the rail, that in the recesses (7) in the roll body cage for each roll body (3) there are two facing supporting surfaces (5) and that the rail and the supporting surfaces are so constructed that the perpendicular through the supporting surfaces (5) is substantially also perpendicular to two connecting lines from in each case one bearing point of the roll body (3) on its rail to a contact or rolling point of the roll body (3) with another roll body.

3. Rolling member for the longitudinal guide system according to one of the claims 1 or 2, in which each roll body cage has recesses (7) located in a plane, which pass into one another and in which are integrated supporting surfaces (5), which are inclined by an obtuse angle to one another and serve to receive or support in each case one roll body (3), characterized in that each roll body cage has three recesses (7) and that the supporting surfaces (5) are inclined by an angle of 120° to one another.

4. Rolling member according to claim 3, characterized in that the roll bodies (3) are balls.

5. Rolling member according to one of the claims 3 or 4, characterized in that the roll body cage is made from a softer material than the roll bodies.

6. Rolling member according to one of the claims 3 to 5, characterized in that the outer opening (10) of the recesses (7) for receiving the roll bodies (3) taper in cross-section under the largest cross-section of the roll body in such a way that a roll body (3) can be trapped in the recess (7).

7. Rolling member according to claim 5 and 6, characterized in that the cross-sectional taper is so dimensioned and the material for the roll body cage is so selected that the roll bodies can be introduced or snapped from the outside by pressure into the recess.

8. Rolling member according to one of the claims 3 to 7, characterized in that at least two roll body cages with their associated three roll bodies are located in a rolling member (1).

9. Rolling member guide for the longitudinal guide system according to claim 1 or 2 in which the rails are at an obtuse angle to one another, characterized in that the rails are arranged at an angle of substantially 120° to one another, each rail substantially comprising two parallel roll body running bars (6).

10. Rolling member guide according to claim 9, characterized in that the rails are made from a harder material than the guide channel.

11. Rolling member guide according to one of the claims 9 or 10, characterized in that the rolling member guide (2) is closed all-round and has with identical angular spacings rails with roll member running bars (6).

12. Longitudinal guide system according to claim 1 or 2 using rolling members (1) according to one of the claims 3 to 8 in guides (2) according to one of the claim 9 to 11, characterized in that a plurality of rolling members are used in a rolling member guide.

13. Longitudinal guide system according to claim 12, characterized in that the lined up rolling members (1) are elastically flexible or interconnected in an articulated manner.

## Revendications

1. Système de guidage longitudinal comprenant un guide (2) pour un corps de roulement et au moins un corps de roulement (1) guidé dans le guide, et dans lequel est intégrée au moins une cage de roulement, dans laquelle des éléments de roulement (3) en contact mutuel sont disposés dans des évidements (7), des moyens (5) pour le couplage d'une force de charge étant disposés dans le roulement, le guide (2) présentant un canal de guidage (4) avec des rails pour le roulement des éléments de roulement, le guide (2) contenant un rail pour chaque élément de roulement (3), les rails étant disposés les uns par rapport aux autres de telle sorte ce que deux lignes de jonction allant du point d'appui de chaque élément de roulement sur son rail au point de contact des deux éléments de roulement forment un angle obtus, et au moins une surface d'appui (5) étant prévue dans les évidements (7) de la cage de roulement pour chaque élément de roulement (3) comme moyen de couplage d'une force de charge, la surface d'appui étant disposée de telle sorte que la perpendiculaire à ladite surface soit aussi sensiblement perpendiculaire à la ligne de jonction allant du point d'appui de l'élément de roulement (3) sur son rail à l'un des points de contact ou de roulement de cet élément de roulement sur un autre élément de roulement et la coupe en son milieu, caractérisé en ce que trois éléments de roulement en contact mutuel sont disposés sous la forme d'un triplet d'éléments dans la ou les cages de roulement.

2. Système de guidage longitudinal selon la revendication 1, caractérisé en ce que les rails qui se trouvent dans le guide sont pourvus de surfaces d'appui telles que chaque élément de roulement repose par deux points sur le rail, en ce que deux surfaces d'appui (5) opposées l'une à l'autre sont prévues dans les évidements (7) de la cage de roulement pour chaque élément de roulement (3), et en ce que le rail et les surfaces d'appui sont conçus de telle sorte que la perpendiculaire à deux surfaces d'appui (5) soit aussi sensiblement perpendiculaire à deux lignes de jonction allant de chaque point d'appui de l'élément de roulement (3) sur son rail à un point de contact ou de roulement de l'élément de roulement sur un autre élément de roulement.

3. Roulement pour le système de guidage longitudinal selon l'une ou l'ensemble des revendications 1 ou 2, dans lequel chaque cage de roulement présente des évidements (7) disposés dans un plan, qui se suivent avec une transition des uns aux autres et dans lesquels sont intégrées des surfaces d'appui (5), qui sont inclinées les unes par rapport aux autres d'un angle obtus et qui servent chacune à recevoir et à soutenir un élément de roulement (3), caractérisé en ce que chaque cage de roulement présente trois évidements (7) et en ce que les surfaces d'appui (5) sont inclinées les unes par rapport aux autres d'un angle de 120°.

4. Roulement selon la revendication 3, caractérisé en ce que les éléments de roulement (3) sont des billes.

5. Roulement selon l'une quelconque des revendications 3 ou 4, caractérisé en ce que la cage de roulement est en un matériau plus mou que les éléments de roulement.

6. Roulement selon l'une ou l'ensemble des revendications 3 à 5, caractérisé en ce que la section de l'embouchure extérieure (10) des évidements (7) recevant les éléments de roulement (3) est inférieure à la plus grande section de l'élément de roulement, de sorte qu'un élément de roulement (3) peut être retenu dans l'évidement (7).

7. Roulement selon la revendication 5 ou 6, caractérisé en ce que le rétrécissement de la section et le matériau de la cage de roulement sont tels que les éléments de roulement peuvent être introduits ou encliquetés dans l'évidement depuis l'extérieur par une pression.

8. Roulement selon l'une ou l'ensemble des revendications 3 à 7, caractérisé en ce qu'au moins trois cages de roulement avec les'trois éléments de roulement correspondants sont prévues dans un corps de roulement (1).

9. Guidage à roulement pour le système de guidage longitudinal selon la revendication 1 ou 2, dans lequel les rails de roulement sont disposés à angle obtus les uns par rapport aux autres, caractérisé en ce que les rails de roulement sont disposés sensiblement à un angle de 120° les uns par rapport aux autres et chaque rail se compose pour l'essentiel de deux barres de roulement (6) parallèles pour les éléments de roulement.

10. Guidage à roulement selon la revendication 9, caractérisé en ce que les rails sont fabriqués dans un matériau plus dur que le canal de guidage.

11. Guidage à roulement selon l'une quelconque des revendications 9 ou 10, caractérisé en ce que le guide de roulement (2) est fermé sur sa circonférence et présente à des écarts angulaires égaux des rails pourvus de barres de roulement (6) pour les éléments de roulement.

12. Système de guidage longitudinal selon la revendication 1 ou 2 utilisant des corps de roulement (1) selon l'une ou l'ensemble des revendications 3 à 8 dans des guides (2) selon l'une ou l'ensemble des revendications 9 à 11, caractérisé en ce qu'une pluralité de roulements sont utilisés dans un guide de roulement.

13. Système de guidage longitudinal selon la revendication 12, caractérisé en ce que les corps de roulement (1) alignés de façon contiguë sont reliés entre eux de manière flexible ou articulée et élastique.
